# EUROPÄISCHE PATENTANMELDUNG

(11) **EP 4 775 869 A1**
(43) Veröffentlichungstag der Anmeldung: **15.07.2026**
(21) Anmeldenummer: 25151371.9
(22) Anmeldetag: 10.01.2025
(51) Int. Cl.: F16M 11/20, F16M 11/24

(54) **FESTSTELLBREMSE FÜR EINEN FEDERARM**

(71) Anmelder: Ondal Medical Systems GmbH, 36088 Hünfeld (DE)
(72) Erfinder: Oginski, Stefan, 36043 Fulda (DE); Aha, Jürgen, 36167 Nüsttal (DE)
(74) Vertreter: Maiwald GmbH

(57) **Zusammenfassung**

Feststellbremse (10) für einen Federarm (12), umfassend einen ersten Körper (14) mit einem ersten Verzahnungsabschnitt (16), wobei der erste Körper (14) dazu eingerichtet ist, im montierten Zustand der Feststellbremse (10) mit einem ersten Bauteil des Federarms (12), das seine Neigung bei einer Höhenverstellung des Federarms (12) ändert, verbunden zu sein, einen zweiten Körper (22) mit einem zweiten Verzahnungsabschnitt (24), wobei der zweite Verzahnungsabschnitt (24) mit dem ersten Verzahnungsabschnitt (16) in Eingriff bringbar ist, wobei der zweite Körper (22) dazu eingerichtet ist, im montierten Zustand der Feststellbremse (10) an einem zweiten Bauteil des Federarms (12), das seine Neigung bei einer Höhenverstellung des Federarms (12) beibehält, drehbar gelagert zu sein, und ein erstes Griffelement (36), wobei ein Endbereich des Griffelements dazu eingerichtet ist, im montierten Zustand der Feststellbremse (10) am zweiten Bauteil drehbar gelagert zu sein. Das erste Griffelement (36) ist dabei mechanisch derart mit dem zweiten Körper (22) verbunden, dass der erste Verzahnungsabschnitt (16) im nicht betätigten Zustand des ersten Griffelements (36) drehfest mit dem zweiten Verzahnungsabschnitt (24) im Eingriff steht und im betätigten Zustand des ersten Griffelements (36) radial vom zweiten Verzahnungsabschnitt (24) beabstandet ist.

## Beschreibung

### Technisches Gebiet

Die vorliegende Erfindung betrifft Feststellbremsen für einen Federarm sowie Federarmsysteme mit einer solchen Feststellbremse.

### Stand der Technik

In Krankenhäusern und ärztlichen Behandlungsräumen werden typischerweise Geräte wie beispielsweise Leuchten oder Monitore höhenverstellbar aufgehängt, um diese an die Bedürfnisse des Anwenders anzupassen und entsprechend positionieren zu können. Um eine Justierung und Positionierung solcher Geräte zu unterstützen, werden dazu in der Regel Federarme verwendet, welche für sich genommen oder in Kombination mit einem Ausleger einen vorgegebenen, potenziellen Bewegungsradius des am Federarm befestigten Geräts definieren. Die Traglast für solche Federarme ist dabei typischerweise einstellbar, sodass das am Federarm befestigte Gerät auch bei einer Neigung des Federarms seine Höhenposition beibehalten kann.

Sollte sich die Traglast jedoch während des Betriebs des Federarms ändern, so kann dies dazu führen, dass die vom Haltemechanismus des Federarms bereitgestellte Neigung nicht länger erhalten bleibt, wodurch sich eine gegebenenfalls rasche Änderung der Höhenposition ergeben kann. Solche Änderungen der Traglast können sich beispielsweise ergeben, wenn das Volumen und das entsprechende Gewicht eines mit dem Federarm gekoppelten Fluidbehälters sich während einer Behandlung eines Patienten reduziert. Ebenfalls können Geräte wie beispielsweise Monitore, welche beispielsweise an einem vorderen Gelenk des Federarms befestigt sind, abgenommen oder ausgetauscht werden, wodurch sich die Traglast erheblich ändern kann. Bereits die Betätigung einer am Federarm befestigten Tastatur kann zur Folge haben, dass die Traglast derart geändert wird, dass die eingestellte Position nicht länger vom eingestellten Federarm-Mechanismus gehalten werden kann.

Um bei eventuell veränderbaren Lasten eine gewünschte Höhenposition eines am Federarm befestigten Geräts oder eine Neigung des Federarms beizubehalten, können lösbare Feststellbremsen vorgesehen sein, welche verhindern, dass sich die eingestellte Höhe bei einer Änderung der Traglast verstellt. Solche Feststellbremsen können beispielsweise auf einer Klemmfunktion oder einer formschlüssigen Halterung basieren oder, im Falle von pneumatischen oder hydraulischen Feststellbremsen, aufgrund einer Blockierung eines Fluidflusses eine Arretierung der Höhenposition ermöglichen.

So sind beispielsweise Klemmvorrichtungen für Federarme bekannt, wobei der Federarm eine Spindel oder Zugstange in einem Federrohr aufweist. Die Spindel wird dabei bei einer Höhenverstellung des Federarms zumindest teilweise aus dem Federrohr herausgezogen und bewirkt entsprechend eine Änderung eines Drehmoments am Federarm. Die Klemmvorrichtung kann dabei eine mit der Spindel verbundene und parallel verlaufende Stange umgeben, wobei die Stange durch die Betätigung eines Drehgriffs festgeklemmt werden kann, um aufgrund der bereitgestellten Reibungskraft eine Bewegung der damit verbundenen Spindel zu verhindern. Ebenfalls sind formschlüssige Arretierungen bekannt, wobei eine solche Stange oder eine andere mit der Spindel verbundene Komponente nicht durch eine Klemmwirkung, sondern durch einen Stift, welcher lösbar in einer Nut der Komponente geführt ist, arretiert werden kann. Auf diese Weise wird eine Bewegung der Spindel in Längsrichtung, welche für eine Höhenverstellung erforderlich ist, verhindert.

### Darstellung der Erfindung

Erfindungsgemäß wurde erkannt, dass bekannte Feststellbremsen verschiedene Nachteile aufweisen. So wurde festgestellt, dass für reibschlüssige Feststellbremsen aufgrund der vergleichsweise geringen Reibwerte relativ hohe Betätigungskräfte erforderlich sind, um eine ausreichende Bremswirkung darstellen zu können. Um das Einstellen der hohen Betätigungskraft zu unterstützen, können Schraubgriffe eingesetzt werden. Die Bedienung der Schraubgriffe ist jedoch zeitaufwendig und kann bei hohen Betätigungskräften durch den Benutzer als unangenehm empfunden werden.

Ebenfalls wurde erkannt, dass solche Feststellbremsen separat gehalten werden müssen und keine gleichzeitige Bedienung des Federarms ermöglichen. Aufgrund der separaten Betätigung der Feststellbremse und des Federarms kann eine Feinjustierung der Höhenposition oder der Neigung des Federarms erschwert werden. Vor diesem Hintergrund ist auch die Anordnung solcher Schraubgriffe, welche sich typischerweise an den Seiten des Federarms befinden, nachteilig für die Bedienung und Feststellung des Federarms. Darüber hinaus ist es oft schwierig, die Feststellbremse bei Verwendung von Schraubgriffen in ihren ursprünglichen Zustand zurückzusetzen.

Bei Feststellbremsen, welche auf einer formschlüssigen Arretierung basieren, wurde festgestellt, dass die geringe Anzahl von Arretierpositionen und die verhältnismäßig große Beabstandung der benachbarten Arretierpositionen nachteilig ist. Dadurch dass bei Federarmen, welche eine in einem Federrohr geführten Spindel oder Zugstange aufweisen, sich die Spindel bei vertikalen Anpassungen des Federarms nur geringfügig in Längsrichtung bewegt, können die Arretierpositionen aus technischer Sicht nicht näher zueinander angeordnet werden; auch ist eine Erweiterung der Anzahl von Arretierpositionen aus technischer Sicht nicht ohne Weiteres umsetzbar.

Darüber hinaus wird die formschlüssige Halterung typischerweise von einem Stift bereitgestellt, welcher durch eine Aussparung in eine Nut eingreift. Durch die Hebelverhältnisse in der Kinematik des Federarms können bei einer Belastung des Federarms jedoch sehr große Kräfte entstehen. Es wurde entsprechend erkannt, dass bereits bei moderaten Kräften, die in vertikaler Richtung am Ende des Federarms wirken, eine Beschädigung der formschlüssigen Halterung entstehen kann.

Lösungen, welche auf Gasdruckfedern basieren, weisen dagegen den Nachteil auf, dass sie im Laufe ihrer Lebensdauer technisch bedingte und unvermeidbare Undichtigkeiten entwickeln. Entsprechend reduziert sich der Gasdruck nach einer gewissen Zeit, sodass der Federarm nachgestellt oder die Gasdruckfeder ausgetauscht werden muss. Hierdurch erhöhen sich sowohl der Gesamtaufwand als auch die Gesamtkosten für das Betreiben solcher Feststellbremsen.

Ausgehend von dem bekannten Stand der Technik ist es daher eine Aufgabe der vorliegenden Erfindung, eine Feststellbremse für einen Federarm bereitzustellen, welche eine Positionshalterung eines Federarms auch im Falle einer Änderung der Traglast bereitstellt. Bevorzugt weist eine solche Feststellbremse eine Vielzahl von Arretierungspositionen auf und ermöglicht insbesondere eine Feinjustierung und/oder stufenlose Justierung. Bevorzugt ermöglicht eine solche Feststellbremse eine einhändige Bedienung, besonders bevorzugt ermöglicht sie dabei gleichzeitig auch eine Bedienung des Federarms.

Die Aufgabe wird durch die Gegenstände der unabhängigen Ansprüche gelöst. Vorteilhafte Weiterbildungen ergeben sich aus den Unteransprüchen, der Beschreibung und den Figuren.

Entsprechend wird eine Feststellbremse für einen Federarm vorgeschlagen, umfassend einen ersten Körper mit einem ersten Verzahnungsabschnitt, wobei der erste Körper dazu eingerichtet ist, im montierten Zustand der Feststellbremse mit einem ersten Bauteil des Federarms, das seine Neigung bei einer Höhenverstellung des Federarms ändert, verbunden, bevorzugt im Wesentlichen fest verbunden zu sein. Die Feststellbremse weist zudem einen zweiten Körper mit einem zweiten Verzahnungsabschnitt auf, wobei der zweite Verzahnungsabschnitt mit dem ersten Verzahnungsabschnitt in Eingriff bringbar ist, wobei der zweite Körper dazu eingerichtet ist, im montierten Zustand der Feststellbremse an einem zweiten Bauteil des Federarms, das seine Neigung bei einer Höhenverstellung des Federarms beibehält, drehbar gelagert zu sein. Weiterhin umfasst die Feststellbremse ein erstes Griffelement, wobei ein Endbereich des Griffelements dazu eingerichtet ist, im montierten Zustand der Feststellbremse am zweiten Bauteil drehbar gelagert zu sein. Das erste Griffelement ist dabei mechanisch derart mit dem zweiten Körper verbunden, dass der erste Verzahnungsabschnitt im nicht betätigten Zustand des ersten Griffelements drehfest mit dem zweiten Verzahnungsabschnitt im Eingriff steht und im betätigten Zustand des ersten Griffelements radial vom zweiten Verzahnungsabschnitt beabstandet ist.

Aufgrund der erfindungsgemäßen Verzahnungsabschnitte werden der erste Körper und der zweite Körper im nicht betätigten Zustand des Griffelements entsprechend formschlüssig zueinander gehalten. Mit anderen Worten wird durch das Ineinandergreifen der Verzahnungsabschnitte eine Drehung des zweiten Körpers in Umfangsrichtung und relativ zum ersten Körper verhindert, sodass eine entsprechende Begrenzung des ersten Körpers und dem damit verbundenen ersten Bauteil bereitgestellt wird. Die Verzahnungsabschnitte bewirken entsprechend, dass eine Bremskraft auf effiziente Weise auf das erste Bauteil übertragen werden kann.

Durch die Verzahnungsabschnitte werden zudem, wenn diese miteinander im Eingriff stehen, hohe Bremskräfte bereitgestellt. Denn die feste Verbindung zwischen dem ersten Körper und dem ersten Bauteil bewirkt, dass bei einer Bewegung des ersten Bauteils, beispielsweise in Reaktion auf eine versuchte Höhenverstellung des Federarms, keine oder nur eine verhältnismäßig kleine relative Bewegung zwischen erstem Körper und dem ersten Bauteil stattfindet. Entsprechend wird eine vom ersten Bauteil ausgehende Kraft vorteilhafterweise über die entsprechenden Verzahnungsabschnitte verteilt, wobei eine Drehung der Verzahnungsabschnitte relativ zueinander verhindert wird. Im Vergleich zu herkömmlichen Feststellbremsen, für die beispielsweise ein einzelner Stift vorgesehen ist, ist die vorliegende Feststellbremse aufgrund der Kraftverteilung für erheblich größere Belastungen ausgelegt, ohne dass das Risiko einer Beschädigung des Feststellmechanismus dadurch erhöht wird.

Gleichermaßen kann die Feststellbremse durch die vorgesehenen Verzahnungsabschnitte dennoch auf einfache Weise durch die Betätigung des ersten Griffelements und die entsprechende radiale Beabstandung gelöst werden. Dies kann vorteilhafterweise ganz ohne Einsatz eines Schraubgriffs erfolgen; aufgrund des ersten Griffelements kann die Feststellbremse einfach zwischen der Halteposition und der gelösten Position gewechselt werden, ohne dass die Arretierfunktion oder das Justieren des Federarms dadurch beeinträchtigt werden.

Die Verzahnungsabschnitte gemäß der Erfindung haben darüber hinaus den Vorteil, dass eine Arretierung im Wesentlichen unabhängig von einer Bewegungsbahn einer Spindel bereitgestellt werden kann. Entsprechend kann eine Vielzahl von Arretierungspositionen bereitgestellt werden, wobei aufgrund der Geometrie der Verzahnungsabschnitte ebenfalls eine Feinjustierung der Feststellbremse durch die entsprechende Dimensionierung und den Abstand zwischen benachbarten Zähnen ermöglicht wird.

Ein weiterer Vorteil der erfindungsgemäßen Feststellbremse liegt darin, dass der zweite Körper sowohl mit dem zweiten Bauteil als auch mit dem ersten Griffelement verbunden ist. Im Falle einer Betätigung des ersten Griffelements, beispielsweise an einem freien Endbereich des ersten Griffelements, welcher dem ersten Körper in seiner Haupterstreckungsrichtung gegenüberliegt, kann die Feststellbremse entsprechend nicht nur gelöst werden. Die vorteilhafte Anordnung ermöglicht aufgrund der Verbindung zwischen dem ersten Griffelement und dem zweiten Bauteil des Federarms ebenfalls ein gleichzeitiges Justieren der Höhenposition des Federarms.

Die erfindungsgemäße Feststellbremse erlaubt es entsprechend nicht nur, dass zwischen einer Halteposition und einer gelösten Position einfach gewechselt werden kann. Sie ermöglicht ebenfalls, dass hohen Belastungskräften effektiv entgegengewirkt werden kann, wobei gleichzeitig eine Feinjustierung der Höhenposition bereitgestellt und sogar eine einhändige Bedienung der Feststellbremse und des Federarms ermöglicht werden.

Die Verzahnungsabschnitte sind zumindest im nicht betätigten Zustand und bevorzugt auch im betätigten Zustand des ersten Griffelements zueinander ausgerichtet. Entsprechend können die Verzahnungsabschnitte als Außenverzahnung beziehungsweise als Innenverzahnung verstanden werden, wobei beispielsweise der erste Körper eine Außenverzahnung und der zweite Körper eine Innenverzahnung aufweisen kann. Der erste Körper und der zweite Körper können ebenfalls als Zahnradsegmente und/oder als voneinander separate und getrennte Komponenten ausgebildet sein.

Bevorzugt weist das erste Griffelement ein Vorspannelement auf, welches dazu eingerichtet ist, das erste Griffelement derart relativ zum zweiten Bauteil vorzuspannen, dass der mit dem ersten Griffelement mechanisch verbundene zweite Verzahnungsabschnitt des zweiten Körpers in Richtung des ersten Verzahnungsabschnitts vorgespannt ist.

Mit anderen Worten wird der zweite Verzahnungsabschnitt im nicht betätigten Zustand in eine Position vorgespannt, in der die Verzahnungsabschnitte ineinandergreifen, sodass der Ausgangsposition des ersten Griffelements einer Halteposition der Feststellbremse entspricht. Die Verzahnungsabschnitte stehen entsprechend miteinander im Eingriff, bis das erste Griffelement betätigt wird und die Verzahnungsabschnitte aufgrund der radialen Beabstandung voneinander gelöst werden. Aufgrund des Vorspannelements werden eventuellen Änderungen in der Traglast entsprechend entgegengewirkt, sodass die Höhenposition oder die Neigung des Federarms entsprechend beibehalten wird. Das Vorspannelement ist dabei bevorzugt für eine vorgegebene Traglast am Federarm ausgelegt, sodass die Feststellbremse in ihrer Halteposition bis zur maximalen Traglast eine Bewegung des ersten Bauteils verhindert.

Das Vorspannelement, welches bevorzugt eine oder mehrere Federn umfasst, kann dabei derart angeordnet sein, dass eine Hebelwirkung auf den zweiten Körper bereitgestellt wird, um die Vorspannkraft zu erhöhen. Gleichermaßen kann das Vorspannelement ebenfalls derart angeordnet sein, dass eine Hebelwirkung im Hinblick auf einen freien Endbereich des Griffelements bereitgestellt wird, sodass die Betätigung des Griffelements trotz der erhöhten Vorspannkraft erleichtert werden kann.

Die Feststellbremse weist bevorzugt ein zweites Griffelement auf, welches im montierten Zustand der Feststellbremse fest mit dem zweiten Bauteil verbunden und vom ersten Griffelement beabstandet ist. Das zweite Griffelement weist dabei bevorzugt eine oder mehrere mit dem Vorspannelement verbundene Haltevorrichtungen auf.

Das zweite Griffelement bildet entsprechend eine vom ersten Griffelement separate Komponente, welche jedoch über das Vorspannelement mit dem ersten Griffelement mechanisch verbunden ist. Dies hat den Vorteil, dass bei Betätigung des ersten Griffelements auch das zweite Griffelement betätigt werden kann. Dabei kann das erste Griffelement bei Betätigung relativ zum zweiten Griffelement gedreht werden, wodurch das erste Griffelement zusammen mit dem zweiten Griffelement betätigt werden kann und die Bewegung des zweiten Verzahnungsabschnitts weg vom ersten Verzahnungsabschnitt durch das zweite Griffelement unterstützt wird. Aufgrund der festen Verbindung des zweiten Griffelements mit dem zweiten Bauteil, kann darüber hinaus eine einhändige Betätigung ermöglicht werden, wodurch die Feststellbremse einerseits gelöst, andererseits der Federarm über das zweite Bauteil in seiner Höhe angepasst werden kann. Um die Betätigung des ersten Griffelements zusammen mit dem zweiten Griffelement zu erleichtern, kann das zweite Griffelement zumindest in Höhenrichtung im Wesentlichen parallel zum ersten Griffelement geführt sein.

Die mindestens eine Haltevorrichtung kann beispielsweise in Form einer jeweiligen Tasche ausgebildet sein, welche bevorzugt eine jeweilige Feder aufnimmt und diese am zweiten Griffelement befestigt. Die Haltevorrichtungen unterstützen somit die Vorspannkraft auf das erste Griffelement, um die Feststellbremse in ihre Halteposition vorzuspannen. Die Positionierung der Haltevorrichtung ist dabei bevorzugt derart gewählt, dass ein Abstand des jeweiligen Vorspannelements zum Endbereich des ersten Griffelements, welches mit dem zweiten Körper mechanisch verbunden ist, kürzer als ein Abstand zu einem gegenüberliegenden freien Endbereich des ersten Griffelements ist. Auf diese Weise kann eine Hebelwirkung bei Betätigung des ersten Griffelements zum Lösen der Feststellbremse vergrößert werden, ohne dass sich dies negativ auf die Vorspannung des ersten Griffelements und des damit verbundenen zweiten Verzahnungsabschnitts auswirkt. Mit anderen Worten kann das erste Griffelement einen ersten Hebel bilden, welcher sich vom freien Endbereich des ersten Griffelements zum Lagerungspunkt erstreckt, und einen zweiten Hebel bilden, welcher sich von der Position des Vorspannelements am ersten Griffelement zum Lagerungspunkt erstreckt, wobei der erste Hebel typischerweise größer als der zweite Hebel ist.

Um die Befestigung des zweiten Griffelements am zweiten Bauteil zu erleichtern, kann das zweite Griffelement eine oder mehrere Aufnahmen für das zweite Bauteil oder für ein an der Vorderseite des Federarms angebundenes Gelenk aufweisen. Die Aufnahmen können beispielsweise in Form von Bohrungen vorgesehen sein, um eine schraubschlüssige Befestigung am zweiten Bauteil oder am vorderen Gelenk zu ermöglichen. Beispielsweise können zwei oder mehr, bevorzugt vier, Bohrungen oder Durchgangslöcher vorgesehen sein, wodurch entsprechende Schrauben in das zweite Bauteil eingedreht werden können. Im Falle einer Befestigung am vorderen Gelenk kann das vordere Gelenk einen entsprechenden Abschnitt aufweisen, auf dem die Aufnahmen plan aufliegen können, um die Befestigung zu erleichtern. Alternativ zu Bohrungen können jedoch ebenfalls formschlüssige, insbesondere schnappschlüssige Aufnahmen vorgesehen sein.

Für bestimmte Fälle, z.B. dann, wenn ein am Federarm befestigtes Endgerät eine besonders große räumliche Dimensionierung aufweist, kann ebenfalls vorgesehen sein, dass sowohl das zweite Griffelement als auch das erste Griffelement am Endgerät befestigt beziehungsweise drehbar gelagert sind. Auf diese Weise können die zum Lösen der Feststellbremse zu betätigenden Griffelemente weiterhin gut erreichbar sein. Um die zur Betätigung des ersten Körpers erforderliche Verbindung zwischen dem ersten Griffelement und dem ersten Körper bereitzustellen, kann eine entsprechende kraftübertragende Einheit vorgesehen sein, beispielsweise ein Bowdenzug, welche(r) das erste Griffelement mit dem zweiten Körper mechanisch verbindet.

Bevorzugt sind die eine oder mehreren Aufnahmen derart ausgebildet und angeordnet, dass das zweite Griffelement sich im Wesentlichen in einer Haupterstreckungsebene des ersten Bauteils und des zweiten Bauteils erstreckt. Das zweite Griffelement ist dabei bevorzugt parallel zum ersten Griffelement geführt. Mit anderen Worten erstreckt sich das zweite Griffelement, bevorzugt ebenfalls das erste Griffelement, dann nicht seitlich oder lateral, sondern in Richtung der Vorderseite des Federarms beziehungsweise des vorderen Gelenks oder des daran angebrachten Geräts. Auf diese Weise kann das zweite Griffelement einfach von einer Bedienungsseite eines Geräts betätigt werden, zumal durch die Anordnung die Griffelemente einfach zu erreichen sind. Der Benutzer kann die Griffelemente entsprechend komfortabel betätigen, indem er beispielsweise das erste Griffelement und das zweite Griffelement mit einer Hand umfasst und das erste Griffelement hoch in Richtung des zweiten Griffelements drückt, wodurch die Griffelemente zusammengedrückt werden und die Feststellbremse gelöst werden kann. Mit derselben Hand wird dann gleichzeitig eine Bewegung des Federarms zur Anpassung der Höhenposition ermöglicht.

Weiterhin wird durch die ermöglichte Anordnung an der Vorderseite des Federarms auch die Drehung des Federarms um eine vertikale Achse, welche beispielsweise von einem angebundenen Ausleger bereitgestellt wird, nicht durch das zweite Griffelement beeinträchtigt.

Aufgrund der Ausgestaltung als separate Komponenten, können das erste Griffelement und das zweite Griffelement vorteilhafterweise jeweils als Gussteil, insbesondere als Druckgussteil ausgebildet sein. Bevorzugt sind die Griffelemente aus einem Metall gebildet, insbesondere aus Aluminium oder einer Aluminiumlegierung. Dadurch können die Griffelemente verhältnismäßig leicht, jedoch gleichzeitig langlebig ausgebildet sein. Obwohl das erste Griffelement alternativ auch monolithisch mit dem zweiten Körper ausgebildet sein kann, ist das erste Griffelement bevorzugt als separate Komponente vorgesehen, wodurch das erste Griffelement aus einem Druckguss aus einem Metall ausgebildet werden kann, welches sich vom Material des zweiten Körpers unterscheidet. So kann der zweite Körper beispielsweise aus gehärtetem Stahl oder einem ähnlichen Material gebildet sein, welches im Hinblick auf die bereitgestellten Kräfte an den Verzahnungsabschnitten besonders vorteilhaft ist.

Um die Reinigung der Griffelemente zu vereinfachen und zu verhindern, dass potenzielle Verunreinigungen an Stellen auftreten, welche schwer zu reinigen sind und hygienische Probleme hervorrufen könnten, können die Griffelemente und bevorzugt auch das mindestens eine Vorspannelement von Kunststoffverkleidungen umgeben und darin aufgenommen sein. Solche Kunststoffverkleidungen können beispielsweise als Kunststoffspritzgussteile bereitgestellt sein, welche bevorzugt schalenförmig beziehungsweise als Halbschalen ausgebildet und zusammensteckbar sind. Die Verbindung der Spritzgussteile kann beispielsweise mittels Taschen und Rasthaken erfolgen, welche an einem jeweiligen Verkleidungsteil vorgesehen sind und beim Zusammenstecken ineinandergreifen, bevorzugt schnappschlüssig. Zusätzlich oder alternativ können die Verkleidungsteile auch mittels Schraubverbindungen miteinander verbunden sein, wobei die Schrauben beispielsweise als selbstfurchende Schrauben ausgestaltet sein können.

Die Verkleidungsteile können weiterhin in unterschiedlichen Farben hergestellt sein, sodass ein Bediener beispielsweise aufgrund einer Farbe für die Verkleidung des ersten Griffelements auf das zu betätigende Griffelement aufmerksam gemacht werden kann. Es ist ebenfalls möglich, dass in den Verkleidungen Piktogramme eingebracht sind, welche die vorgesehene Bedienung der Feststellbremse veranschaulichen, beispielsweise mittels Pfeilen, welche zum Lösen der Feststellbremse auf ein Zusammendrücken der Griffelemente hinweisen.

Dadurch dass die Feststellbremse insbesondere dazu vorgesehen ist, eine Neigung oder eine Höhenposition des Federarms auch im Falle einer Änderung der Traglast beizubehalten, sind die Verzahnungsabschnitte im nicht betätigten Zustand des ersten Griffelements bevorzugt derart angeordnet, dass eine vertikale Bewegung des Federarms, ausgehend von einem üblichen Gravitationsfeld, verhindert wird. Entsprechend sind die Kontaktflächen zwischen den Verzahnungsabschnitten im nicht betätigten Zustand des ersten Griffelements bevorzugt im Wesentlichen senkrecht zu einer Höhenverstellrichtung des Federarms ausgerichtet. Auf diese Weise können die Verzahnungsabschnitte sowohl formschlüssig als auch reibschlüssig zueinander gehalten werden.

Die Verzahnungsabschnitte können insbesondere drehmomentgekoppelt sein. Bevorzugt wird die Begrenzung der Drehmomentkopplung dabei vom Vorspannelement unterstützt, sodass keine relative Drehung zwischen den Verzahnungsabschnitten auftreten kann und der erste Körper und der zweite Körper sich entsprechend nicht relativ zueinander bewegen können.

Wie vorstehend beschrieben, haben die erfindungsgemäßen Verzahnungsabschnitte unter anderem den Vorteil, dass aufgrund der Anordnung eine radiale Bewegung zwischen dem ersten Körper und dem zweiten Körper ermöglicht wird. Somit kann bei Betätigung des ersten Griffelements auf einfache Weise eine radiale Beabstandung zwischen den Verzahnungsabschnitten bereitgestellt werden und die Feststellbremse gelöst werden. Darüber hinaus ist dadurch keine unmittelbare Kopplung zur Bewegungsbahn einer im Federarm angeordneten Spindel vorgesehen, sodass eine größere Anzahl von Arretierpositionen und eine feinere Justierbarkeit bereitgestellt werden können. Bevorzugt sind die Rastpositionen der Verzahnungsabschnitte dabei gleichmäßig voneinander beabstandet, wobei ein Abstand zwischen benachbarten Rastpositionen bevorzugt zwischen 2 Grad und 10 Grad liegt, besonders bevorzugt zwischen 4 Grad und 8 Grad. Auf diese Weise kann eine besonders feine Justierung, im Wesentlichen stufenlos, bei einer hinreichenden mechanischen Stabilität gewährleistet sein. Die Verzahnungsabschnitte können dabei identisch zueinander ausgebildet sein, sodass sie vollständig ineinandergreifen können, um die formschlüssige Halterung weiter zu verbessern.

Um die Befestigung am jeweiligen Bauteil zu vereinfachen, können der erste Körper und der zweite Körper plattenförmig ausgebildet sein. Die Körper können somit verhältnismäßig schlank und dünn dimensioniert sein, wodurch sie einfacher am jeweiligen Bauteil anzubringen sind. Darüber hinaus können durch eine solche Ausgestaltung ebenfalls die Herstellungskosten und der Materialaufwand erheblich reduziert werden.

Bevorzugt weist der erste Körper einen länglichen und/oder stabförmigen Abschnitt auf, welcher an einem dem ersten Verzahnungsabschnitt gegenüberliegenden Endbereich einen Befestigungsmechanismus für das erste Bauteil aufweist. So können beispielsweise eine oder mehrere Schraublöcher vorgesehen sein, bevorzugt mindestens zwei, welche eine (verhältnismäßig) feste Schraubverbindung oder eine Schraubverbindung mit einem geringen Spiel zwischen dem ersten Körper und dem ersten Bauteil ermöglichen und derart angeordnet sind, dass der erste Körper und das erste Bauteil nicht oder nur geringfügig relativ zueinander bewegbar sind.

Entsprechend kann der erste Körper dazu ausgebildet sein, im montierten Zustand der Feststellbremse schraubschlüssig, formschlüssig oder stoffschlüssig mit dem ersten Bauteil verbunden zu sein. Im Hinblick auf die feste Verbindung zwischen dem ersten Körper und dem ersten Bauteil ermöglicht eine plattenförmige Ausbildung darüber hinaus, dass der erste Körper einfach am ersten Bauteil angelegt beziehungsweise angebunden und/oder einfach in eine entsprechende Nut des ersten Bauteils eingeführt werden kann. Die Ausgestaltung des ersten Körpers mit insbesondere einem länglichen, plattenförmigen Abschnitt ist somit einerseits aufgrund des geringen Gewichts und der geringen Dimensionierung des ersten Körpers und andererseits aufgrund der vereinfachten und verbesserten Befestigung am ersten Bauteil besonders vorteilhaft. Darüber hinaus ist eine Ausgestaltung des ersten Körpers und des ersten Bauteils als separate Komponenten vorteilhaft; hierdurch wird nicht nur ein Retrofitting vereinfacht und ebenfalls ermöglicht, dass der erste Körper und das erste Bauteil aus unterschiedlichen Materialien gebildet sein können, wodurch den unterschiedlichen mechanischen Anforderungen Rechnung getragen werden kann.

Alternativ kann der erste Körper das erste Bauteil umfassen und einstückig mit dem ersten Bauteil ausgebildet sein. Beispielsweise kann der erste Körper mittels Schweißen oder Löten monolithisch mit dem ersten Bauteil ausgebildet sein. Auf diese Weise ist keine separate Befestigung des ersten Körpers erforderlich, wodurch die Montage vereinfacht werden kann.

Der erste Körper ist bevorzugt zur Befestigung an einem vertikal schwenkbaren Teil des Federarms ausgelegt, bevorzugt einem eine Federmechanik aufnehmenden Federarmteil wie einem Federrohr oder einem sogenannten "Federkasten", oder einer Parallelführung des Federarms ausgelegt. Denn erfindungsgemäß wurde erkannt, dass bei Verwendung von herkömmlichen Gasdruckfedern der entscheidende Nachteil auftritt, dass sie aufgrund von technisch bedingten, nicht vermeidbaren Undichtigkeiten im Laufe ihrer Lebensdauer ihren Gasdruck verlieren. Dies erfordert entsprechend, dass der Federarm nach einer gewissen Zeit nachgestellt oder die Gasdruckfeder sogar ausgetauscht werden muss. Durch die Ausgestaltung der Feststellbremse zur Verwendung mit einem vertikal schwenkbaren Teil des Federarms, insbesondere einem "Federkasten" beziehungsweise einem Federrohr oder einer Parallelführung, kann auf die Verwendung von Gasdruckfedern verzichtet werden.

Im montiertem Zustand der Feststellbremse können sich der erste Körper und ein damit verbundener "Federkasten" vorteilhafterweise nicht mehr gegenüber einem vorderen Gelenk, welches am Federarm angeordnet sein kann, verdrehen. Entsprechend kann eine Höhenverstellung des Federarms effektiv begrenzt beziehungsweise vermieden werden, zumal für eine solche Höhenverstellung eine Änderung des Neigungswinkels des "Federkastens" erforderlich ist. Dies gilt gleichermaßen für eine Ausgestaltung des ersten Körpers für die Parallelführung des Federarms, welche bewirkt, dass ein Neigungswinkel eines am Federarm befestigten vorderen Gelenks bei einer Änderung des Neigungswinkels des "Federkastens" im Wesentlichen beibehalten wird. Wird der erste Körper an der Parallelführung befestigt, so wird eine Neigung der Parallelführung gleichermaßen verhindert, sodass eine relative Verdrehung vermieden wird.

Zur Befestigung des ersten Körpers am "Federkasten" kann der erste Körper bevorzugt plattenförmig ausgebildet sein und einen Abschnitt mit einer länglichen Erstreckung aufweisen, wie vorstehend beschrieben. Ein solcher Abschnitt kann dann zur Aufnahme in einer Nut des "Federkastens" dimensioniert sein, um eine sichere Halterung und einfache Befestigung zu unterstützen.

Um die Stabilität der Verzahnung weiter zu erhöhen, kann ein weiteres Paar von Verzahnungsabschnitten vorgesehen sein, welche im montierten Zustand der Feststellbremse auf einer gegenüberliegenden Seite des ersten Bauteils beziehungsweise des zweiten Bauteils angeordnet sind. Entsprechend kann die Feststellbremse einen dritten Körper und einen vierten Körper umfassen, wobei der dritte Körper einen dritten Verzahnungsabschnitt aufweist und dazu eingerichtet ist, im montierten Zustand der Feststellbremse mit dem ersten Bauteil des Federarms (im Wesentlichen fest) verbunden zu sein, und wobei der vierte Körper einen vierten Verzahnungsabschnitt aufweist, welcher mit dem dritten Verzahnungsabschnitt in Eingriff bringbar ist, wobei der vierte Körper dazu eingerichtet ist, im montierten Zustand der Feststellbremse an dem zweiten Bauteil drehbar gelagert zu sein. Das erste Griffelement ist dabei mechanisch derart mit dem vierten Körper verbunden, dass der dritte Verzahnungsabschnitt im nicht betätigten Zustand des ersten Griffelements drehfest mit dem vierten Verzahnungsabschnitt im Eingriff steht und im betätigten Zustand des ersten Griffelements radial vom vierten Verzahnungsabschnitt beabstandet ist.

Auf diese Weise kann eine verbesserte formschlüssige Halterung bereitgestellt werden; die Feststellbremse kann hierdurch auch für höhe Traglasten ausgelegt sein. Darüber hinaus können ein versehentliches Verkippen und/oder das Risiko einer lateralen Bewegung der ineinandergreifenden Verzahnungsabschnitte zueinander weitestgehend vermieden werden.

Bevorzugt sind der dritte Körper und der vierte Körper als separate Komponenten ausgebildet. Alternativ kann jedoch vorgesehen sein, dass der dritte Körper mit dem ersten Körper und der vierte Körper mit dem zweiten Körper einstückig oder monolithisch ausgebildet sind.

Bevorzugt sind der dritte Körper parallel zum ersten Körper und der vierte Körper parallel zum zweiten Körper ausgerichtet, wobei die Körper dazu eingerichtet sind, im montierten Zustand der Feststellbremse an sich gegenüberliegenden Seiten des jeweiligen Bauteils befestigt zu sein. Durch die parallele Führung kann auch die Kraftübertragung auf das jeweilige Bauteil gleichmäßig verteilt werden, sodass (hohe) Materialspannungen vermieden werden können.

Obwohl das erste Griffelement auch an einer Seite des zweiten Körpers drehbar gelagert sein kann, weist das erste Griffelement zur drehbaren Lagerung am zweiten Bauteil bevorzugt zumindest an einer dem zweiten Körper gegenüberliegenden Seite eine oder mehrere Aufnahmen oder Aussparungen auf. Die Aufnahme kann beispielsweise als Bohrung ausgebildet sind, sodass das erste Griffelement mittels einer Schraubverbindung, bevorzugt mit einem Spiel, drehbar gelagert am zweiten Bauteil befestigt werden kann. Beispielsweise kann eine Schraube in das zweite Bauteil eingeschraubt werden, bis der Schraubenkopf auf dem zweiten Bauteil aufliegt. Dabei sitzt der Schraubenkopf bevorzugt in einer Öffnung am Ende des ersten Griffelements, wobei hier ein Spiel vorhanden ist, sodass sich das erste Griffelement um den Schraubenkopf drehen kann. Auf diese Weise kann das erste Griffelement an sich gegenüberliegenden Seiten am zweiten Bauteil gelagert sein, wobei die Lagerung an einer Seite entweder mittelbar über den ersten Körper oder unmittelbar, etwa über das erste Griffelement erfolgen kann. Durch die beidseitige Lagerung können die Stabilität der Drehbewegung sowie die Lastverteilung erheblich verbessert werden. Weiterhin kann dadurch auch ein seitliches Kippen des ersten Griffelements vermieden werden. Die beidseitigen Lagerungen sind dabei bevorzugt parallel beziehungsweise entlang einer Achse oder koaxial zueinander angeordnet, um somit eventuelle Materialspannungen zu vermeiden.

Zur drehbaren Lagerung des zweiten Körpers relativ zum zweiten Bauteil und ebenfalls zum ersten Körper, kann der zweite Körper eine Aussparung oder eine Bohrung zur drehbaren Lagerung des zweiten Körpers am zweiten Bauteil aufweisen. So kann der zweite Körper, wie vorstehend beschrieben, mittels einer Schraube am zweiten Körper befestigt werden. Aufgrund der mechanischen Verbindung kann der zweite Körper, je nach Ausgestaltung der Feststellbremse, somit zumindest an einer Seite des zweiten Bauteils eine mittelbare Lagerung des ersten Griffelements am zweiten Bauteil bereitstellen.

Gemäß einer Ausführungsform kann das erste Griffelement jedoch auch mittels eines Federmechanismus mit dem zweiten Körper verbunden sein, wobei der Federmechanismus dazu eingerichtet ist, eine Vorspannkraft bereitzustellen, welche einer am Federarm vorgegebenen Traglast entspricht. Bevorzugt ist das erste Griffelement dabei an der Seite des Federmechanismus über eine separate Aufnahme am zweiten Bauteil gelagert. Eine Lagerung des zweiten Körpers, beispielsweise über eine entsprechende Aussparung im zweiten Körper, ist dabei im montierten Zustand der Feststellbremse bevorzugt koaxial zur Lagerung des ersten Griffelements ausgebildet, wobei die Lagerung von einer gemeinsamen Schraube bereitgestellt sein kann.

Der Federmechanismus kann dabei sowohl als mechanische Verbindung zwischen dem ersten Griffelement und dem zweiten Körper als auch als Widerstandselement für den zweiten Körper dienen, wenn das erste Griffelement betätigt wird. Die mittelbare Verbindung zwischen dem zweiten Körper und dem ersten Griffelement hat nämlich den Vorteil, dass eine radiale Bewegung des zweiten Verzahnungsabschnitts weg vom ersten Verzahnungsabschnitt durch den Federmechanismus bereitgestellt werden kann. Im Falle einer unzureichenden Traglast am Federarm beziehungsweise einer Abweichung der Traglast von einer eingestellten Positionshaltekraft können die dadurch entstehenden Reibungskräfte zwischen den Verzahnungsabschnitten ein Mitbewegen des zweiten Körpers bei einer Betätigung des ersten Griffelements verhindern.

Wenn beispielsweise ein Monitor vom Federarm während einer eingerasteten Feststellbremse entfernt wurde, kann der Federarm nicht länger ausbalanciert sein. Um zu verhindern, dass der Federarm sich beim Lösen der Feststellbremse ruckartig (nach oben) bewegt, kann eine vom Federmechanismus ausgeübte Kraft, welche für eine vorgegebene Traglast ausgelegt ist, kleiner sein als die Kraft, welche durch die Reibung der Verzahnungsabschnitte aufgrund des nicht länger ausbalancierten Federarms entsteht. Eine Betätigung und relative Drehung des ersten Griffelements kann somit keine Bewegung des zweiten Körpers relativ zum ersten Körper auslösen. Liegt die Traglast jedoch wieder im vorgesehenen Bereich, so sind die Reibungskräfte zwischen den Verzahnungsabschnitten entsprechend reduziert, sodass die Reibungskräfte die Kraft des Federmechanismus nicht länger übersteigen. Bei Betätigung des ersten Griffelements ermöglicht der Federmechanismus entsprechend, dass der zweite Körper sich vom ersten Körper wegbewegt, sodass die entsprechende radiale Beabstandung zwischen den Verzahnungsabschnitten die Lösung der Feststellbremse ermöglicht.

Gemäß einer alternativen Ausführungsform ist das erste Griffelement jedoch mit dem zweiten Körper fest verbunden. So kann das erste Griffelement beispielsweise Bohrungen für eine schraubschlüssige Befestigung aufweisen, wobei der zweite Körper bevorzugt eine Aufnahme für eine drehbare Lagerung am zweiten Bauteil aufweist und das erste Griffelement somit zumindest an einer Seite des zweiten Bauteils mittelbar über den zweiten Körper gelagert wird. Bevorzugt ist das erste Griffelement dabei an mindestens zwei Stellen mit dem zweiten Körper fest verbunden, um eine relative Bewegung oder Verdrehung des ersten Griffelements relativ zum zweiten Körper zu vermeiden.

Gemäß einem weiteren Aspekt der Erfindung wird ein Federarm vorgeschlagen, umfassend ein vertikal schwenkbares, eine Federmechanik aufnehmendes Federarmteil beziehungsweise einen "Federkasten", eine mit dem Federarmteil gekoppelte Parallelführung zum Ausrichten einer mit dem Federarm koppelbaren Gelenkanordnung und eine vorstehend beschriebene, erfindungsgemäße Feststellbremse, wobei der erste Körper mit dem Federarmteil oder mit der Parallelführung verbunden ist.

Der Federarm kann dabei mit einem Ausleger verbunden sein und/oder ein vorderes Gelenk aufweisen, um neben einer Höhenanpassung auch eine seitliche Drehung und/oder ein Kippen eines am Federarm befestigten Geräts zu ermöglichen. Das vordere Gelenk kann dabei insbesondere eine Haltevorrichtung für medizinische Vorrichtungen, Werkzeuge, Schnittstellen, oder Monitore aufweisen.

### Kurze Beschreibung der Figuren

Bevorzugte weitere Ausführungsformen der Erfindung werden durch die nachfolgende Beschreibung der Figuren näher erläutert. Es zeigen:
Figur 1 eine Seitenansicht eines Federarmsystems mit einer Feststellbremse gemäß der Erfindung im montierten Zustand am Federarm;
Figur 2 eine Seitenansicht des Federarmsystems gemäß Figur 1 bei einer Höhenverstellung des Federarms;
Figur 3 eine Seitenansicht einer Feststellbremse gemäß der Erfindung im montierten Zustand an einem Federarm;
Figur 4 eine Seitenansicht der Feststellbremse gemäß Figur 1 im betätigten Zustand des ersten Griffelements;
Figur 5 eine Seitenansicht der Feststellbremse gemäß Figur 2 während einer Höhenverstellung des Federarms;
Figur 6 eine perspektivische Seitenansicht der Feststellbremse gemäß Figur 1 von der gegenüberliegenden Seite;
Figur 7 eine perspektivische Seitenansicht der Feststellbremse gemäß Figur 1;
Figur 8 eine Seitenansicht der Feststellbremse gemäß Figur 1 mit Verkleidung für die Griffelemente;
Figur 9 eine perspektivische Detailansicht des ersten Körpers gemäß der Erfindung;
Figur 10 eine perspektivische Detailansicht des zweiten Körpers gemäß der Erfindung;
Figur 11 eine perspektivische Detailansicht des ersten Griffelements gemäß der Erfindung;
Figur 12 eine perspektivische Detailansicht des zweiten Griffelements gemäß der Erfindung;
Figur 13 eine untere perspektivische Detailansicht eines vorderen Gelenks des Federarms zur Befestigung der erfindungsgemäßen Feststellbremse am Federarm;
Figur 14 eine Seitenansicht einer Ausführungsform der erfindungsgemäßen Feststellbremse mit einer mittelbaren Verbindung zwischen dem zweiten Körper und dem ersten Griffelement;
Figur 15 eine Seitenansicht der Ausführungsform gemäß Figur 14 in einem eingerasteten Zustand der Feststellbremse ohne Betätigung des ersten Griffelements;
Figur 16 eine Seitenansicht der Ausführungsform gemäß Figur 14 bei Betätigung des ersten Griffelements und in einem gelösten Zustand der Feststellbremse; und
Figur 17 eine Seitenansicht der Ausführungsform gemäß Figur 14 bei Betätigung des ersten Griffelements und in einem eingerasteten Zustand der Feststellbremse.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen. Auf eine wiederholte Beschreibung dieser Elemente wird teilweise verzichtet, um Wiederholungen zu vermeiden.

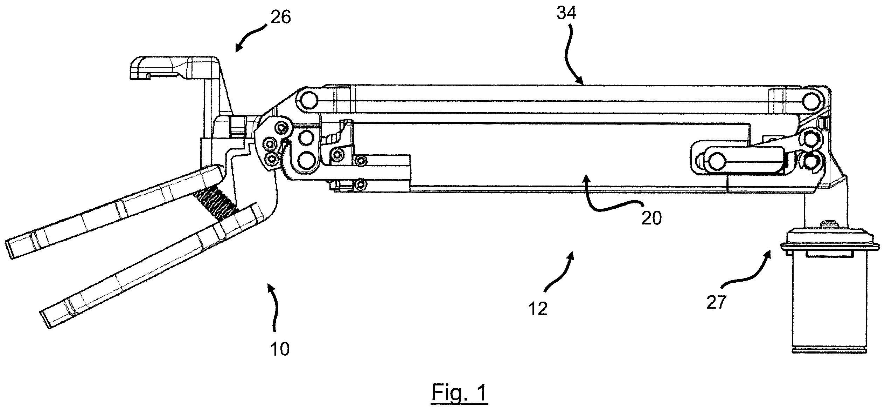

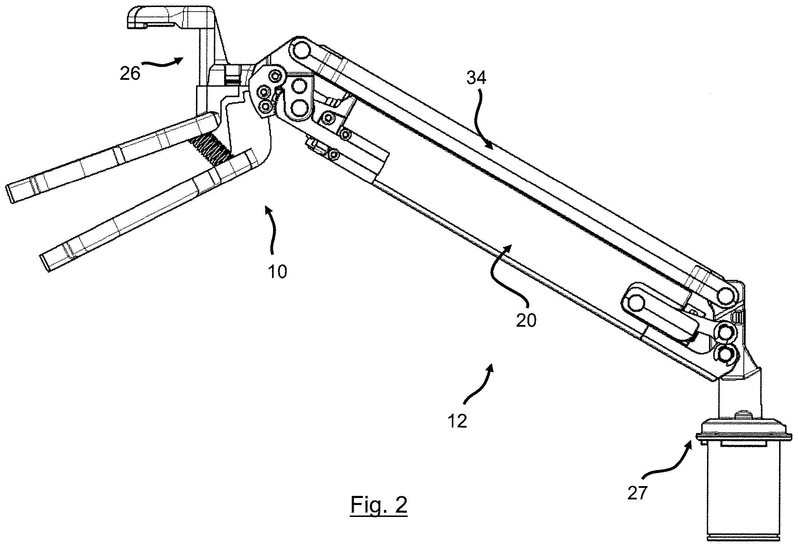

In den Figuren 1 und 2 ist eine erfindungsgemäße Feststellbremse 10 im montierten Zustand an einem Federarm 12 in einem Federarmsystem gezeigt. Die Feststellbremse 10 ist dabei mit einem Gelenk 26, im vorliegenden Beispiel einem vorderen Gelenk, sowie einem "Federkasten" 20 des Federarms 12 verbunden. Wie sich aus dem Vergleich der Figuren 1 und 2 ergibt, kann der "Federkasten" 20 bei einer Höhenverstellung des Federarms 12 vertikal geschwenkt werden, wobei das vordere Gelenk 26 seine Neigung im Wesentlichen beibehält. Diese Funktion wird von einer Parallelführung 34, welche ebenfalls mit dem Gelenk 26 verbunden ist, unterstützt. Am gegenüberliegenden Endbereich des Federarms 12 ist zudem ein hinteres Gelenk 27 vorgesehen, welches die Parallelführung 34 mit dem Federkasten 20 verbindet. Die Feststellbremse 10 ermöglicht dabei, dass die Höhenverstellung des Federarms beschränkt oder gar vollständig verhindert werden kann, wie dies im Hinblick auf die weiteren Figuren nachfolgend detailliert beschrieben wird.

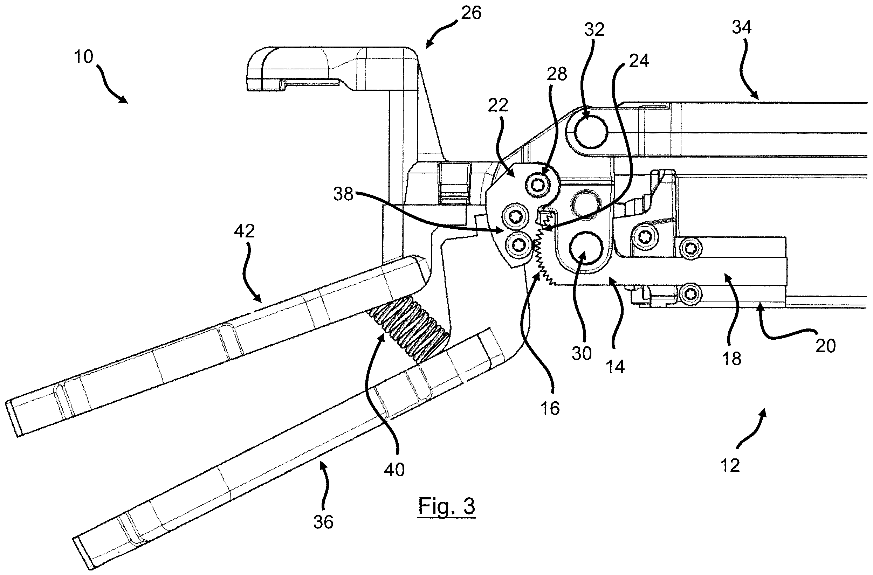

Entsprechend ist in den Figuren 3 bis 5 eine erfindungsgemäße Feststellbremse 10 im montierten Zustand an einem Federarm 12 gezeigt. Die Feststellbremse 10 weist einen ersten Körper 14 auf, welcher im gezeigten Beispiel plattenförmig ausgebildet ist und einen ersten Verzahnungsabschnitt 16 aufweist, sodass der erste Körper 14 ein Zahnradsegment bildet. Der erste Körper 14 ist dabei mit einem ersten Bauteil des Federarms 12 im Wesentlichen fest verbunden, wobei vorliegend der "Federkasten" 20 des Federarms 12, welcher die Federmechanik aufnimmt, als erstes Bauteil gewählt wurde. Ein länglicher Abschnitt 18 des ersten Körpers, welcher sich vom ersten Verzahnungsabschnitt 16 erstreckt, wird dabei vom "Federkasten" 20 gehalten und ist bevorzugt in einer Nut des "Federkastens" 20 eingeführt. Der längliche Abschnitt 18 kann darüber hinaus beispielsweise mittels Schraubverbindungen fest mit dem "Federkasten" 20 verbunden sein.

Der erste Verzahnungsabschnitt 16 ist derart angeordnet, dass ein zweiter Verzahnungsabschnitt 24 eines zweiten Körpers 22 der Feststellbremse 10 in den ersten Verzahnungsabschnitt 16 eingreifen kann, wie dies in der Figur 3 gezeigt ist. Der zweite Körper 22 ist dabei relativ zum ersten Körper 14 drehbar gelagert, sodass die Verzahnungsabschnitte 16, 24 radial voneinander beabstandet werden können. Die drehbare Lagerung des zweiten Körpers 22 wird durch eine Aufnahme 28 beziehungsweise Bohrung des zweiten Körpers 22 ermöglicht, welche beispielsweise eine Verschraubung des zweiten Körpers 22, bevorzugt mit einem vorstehend beschriebenem Spiel, an einem vorderen Gelenk 26 des Federarms 12 ermöglicht, wobei das vordere Gelenk 26 ein zweites Bauteil bildet. Der zweite Körper 22 kann somit sowohl relativ zum Gelenk 26 als auch relativ zum ersten Körper 14 gedreht werden.

Aufgrund der Drehung können die Verzahnungsabschnitte 16, 24 entweder eine Arretierung der Feststellbremse bewirken, nämlich dann, wenn die Verzahnungsabschnitte 16, 24 ineinandergreifen. Oder es kann die Feststellbremse 10 gelöst werden, wenn der zweite Verzahnungsabschnitt 24 aufgrund der Drehung des zweiten Körpers 22 relativ zum ersten Körper 14 vom ersten Verzahnungsabschnitt 16 radial beabstandet wird. Denn wenn die Verzahnungsabschnitte 16, 24 ineinandergreifen, ist eine Bewegung des mit dem "Federkasten" 20 verbundenen ersten Körpers 10 nicht länger möglich. Die für eine Neigungsanpassung des Federarms 12 erforderliche Bewegung des "Federkastens" 20 wird entsprechend durch die Verzahnungsabschnitte 16, 24 begrenzt.

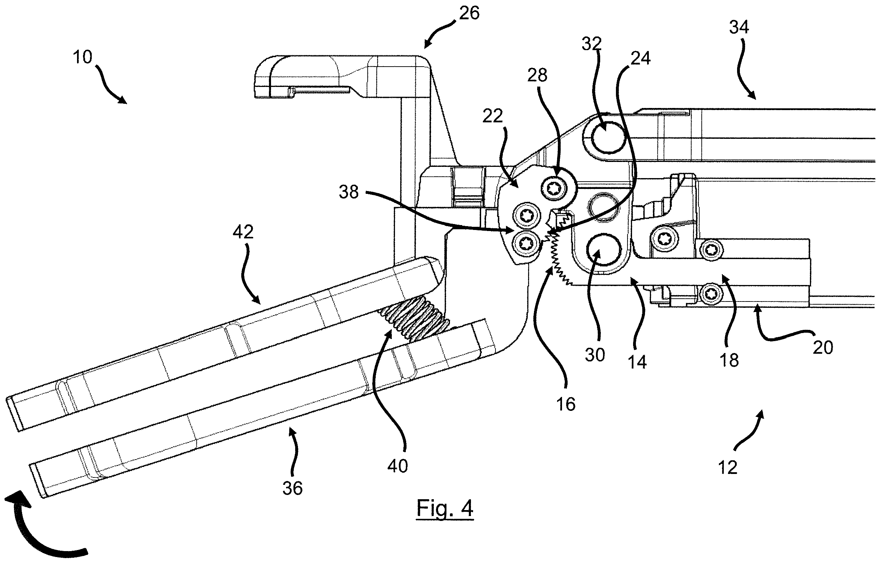

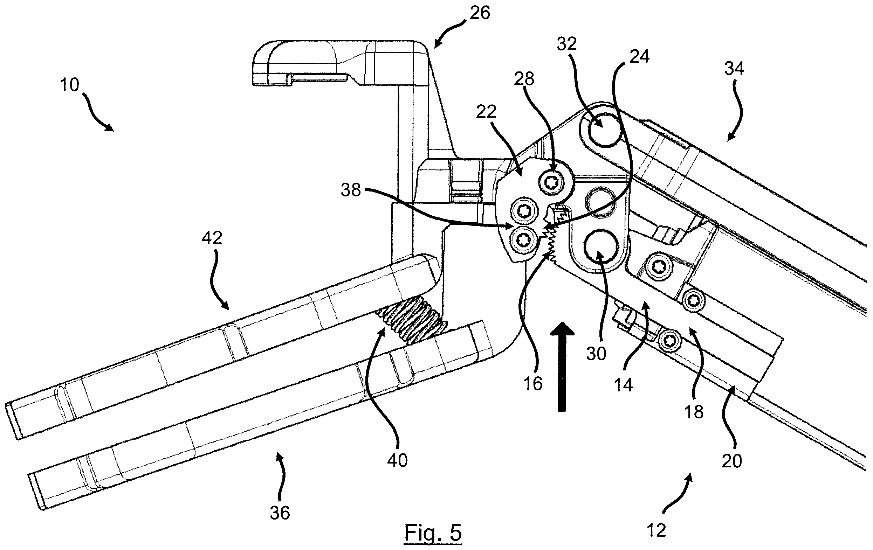

Wird die Feststellbremse 10 jedoch gelöst, so wird die Bewegung des ersten Körpers 14 nicht länger über die Verzahnungsabschnitte 16, 24 verhindert; es kann eine Neigungsanpassung des Federarms 12 erfolgen, wie dies in den Figuren 4 und 5 gezeigt ist. Dabei ist der Federarm 12 über den ersten Körper 14 mittels einer Aufnahme 30 des Gelenks 26 mit dem Gelenk 26 gekoppelt. Um eine Neigung des Gelenks 26 im Falle einer Höhenverstellung oder Neigungsanpassung des Federarms 12 weitestgehend beizubehalten, ist das Gelenk 26 darüber hinaus auch mit einer Parallelführung 34 des Federarms 12 mittels einer entsprechenden Aufnahme 32 gekoppelt. Die Aufnahmen 30, 32, welche eine Verbindung zwischen dem Gelenk 26 und dem Federarm 12 bereitstellen, können beispielsweise als eine jeweilige Bohrung für eine Bolzenverbindung oder Schraubverbindung ausgebildet sein.

Um die Betätigung des zweiten Körpers 22 und die Drehung des zweiten Verzahnungsabschnitts 24 relativ zum ersten Verzahnungsabschnitt 16 zu erleichtern, sind ein erstes Griffelement 36 sowie ein optionales zweites Griffelement 42 vorgesehen. Das erste Griffelement 36 ist dabei über Aufnahmen 38, welche beispielsweise als Bohrungen für Schraubverbindungen bereitgestellt sein können, fest mit dem zweiten Körper 22 verbunden und über die Aufnahme 28 des zweiten Körpers 22 relativ zum Gelenk 26 drehbar gelagert. Das erste Griffelement 36 bildet somit einen Hebel für die Betätigung des zweiten Verzahnungsabschnitts 24 und kann aufgrund der Längserstreckung weg vom Federarm 12 und dem vorderen Gelenk 26 einfach erreichbar und betätigbar sein.

Die Arretierung der Feststellbremse 10 wird von einem Vorspannelement 40 unterstützt. Im vorliegenden Beispiel ist das Vorspannelement 40 als Feder ausgebildet, wobei zwei Federn nebeneinander beziehungsweise seitlich parallel zueinander angeordnet sind, um eine vergrößerte Vorspannung bereitzustellen, welche gleichmäßig über das Griffelement 36 verteilt wird. Darüber hinaus weist die Feststellbremse 10 ein zweites Griffelement 42 auf, welches, im Gegensatz zum ersten Griffelement 36, nicht drehbar gelagert, sondern fest mit dem Gelenk 26 verbunden ist. Das zweite Griffelement 42 bildet somit einerseits eine feste Stütze für das Vorspannelement 40, um das Griffelement 36 und den damit gekoppelten zweiten Körper 22 vorzuspannen. Andererseits wird hierdurch auch ermöglicht, dass das erste Griffelement 36 in Richtung des zweiten Griffelements 42 bewegt werden kann. Das zweite Griffelement 42 kann bei Betätigung des ersten Griffelements 36 ebenfalls gehalten werden, sodass ein Zusammendrücken der Griffelemente 36, 42 und eine einhändige Bedienung ermöglicht werden.

Eine entsprechende Betätigung des ersten Griffelements 36 ist in den Figuren 4 und 5 gezeigt. Entsprechend ist zu sehen, dass sich der zweite Körper 22 aufgrund der Drehung des ersten Griffteils 36 zum zweiten Griffteil 42 vom ersten Körper 14 wegbewegt. Dadurch entsteht eine radiale Beabstandung zwischen den Verzahnungsabschnitten 16, 24. Mit anderen Worten steht der zweite Verzahnungsabschnitt 24 nicht länger mit dem ersten Verzahnungsabschnitt 16 im Eingriff. Wie in Figur 5 dargestellt, kann entsprechend eine Höhenverstellung des Federarms 12 vorgenommen werden, zumal der "Federkasten" 20 nicht länger in seiner Bewegung beschränkt wird. Nach der Justierung des Federarms 12 kann das erste Griffelement 36 wieder losgelassen werden, wodurch der zweite Körper 22 sich wieder in Richtung des ersten Körpers 14 bewegt und die Verzahnungsabschnitte 16, 24 wieder ineinander einrasten und die Feststellbremse 10 arretieren.

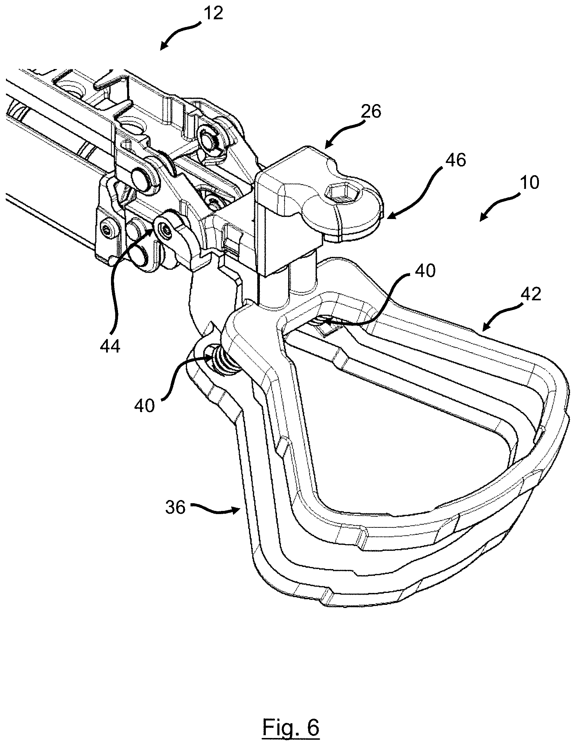

In Figur 6 ist die Feststellbremse 10 in einer perspektivischen Seitenansicht von der gegenüberliegenden Seite dargestellt. Aus dieser Figur geht die bevorzugte Ausgestaltung der Griffelemente 36, 42 hervor. Ebenfalls ist zu sehen, dass das Vorspannelement 40 beziehungsweise die Feder in einer entsprechenden Tasche im ersten Griffelement aufgenommen sein können.

Weiterhin weist das erste Griffelement 36 einen Verbindungsabschnitt mit einer Aufnahme 44, die als Bohrung oder Aussparung ausgeführt ist, auf, welche eine drehbare Lagerung des Griffelements 36 auch an der gegenüberliegenden Seite des Federarms 12 ermöglicht. Der Verbindungsabschnitt ist somit nicht mit dem zweiten Körper 22, wie dies an der nicht gezeigten Seite des Federarms 12 vorgesehen ist, sondern unmittelbar mit dem Gelenk 26 verbunden, sodass eine parallele Lagerung für das erste Griffelement 36 bereitgestellt ist.

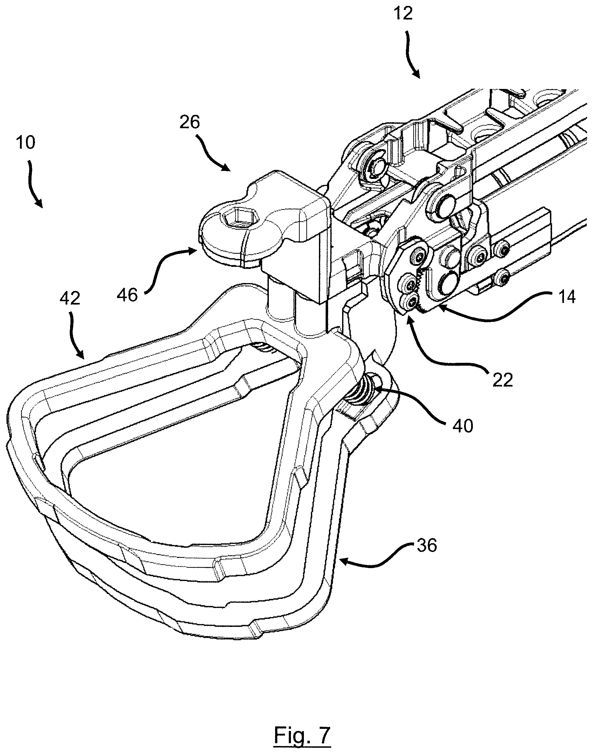

In den Figuren 6 und 7 ist weiterhin die Konfiguration des Gelenks 26 mit weiteren Details gezeigt. So weist das Gelenk 26 ebenfalls eine Haltevorrichtung 46 auf, an der eine Schnittstelle eines Geräts, beispielsweise eines Monitors, oder eine weitere Haltevorrichtung befestigt werden können. Die Haltevorrichtung 46 kann beispielsweise durch einen oder mehrere Vorsprünge bereitgestellt sein, um eine formschlüssige Verbindung zu ermöglichen, und weist bevorzugt eine Durchgangsöffnung für eine Schraube auf. Die Durchgangsöffnung kann dabei an ihrer Oberseite eine Aussparung aufweisen, welche einer Geometrie einer Mutter entspricht, um die Befestigung an der Haltevorrichtung 46 zu erleichtern.

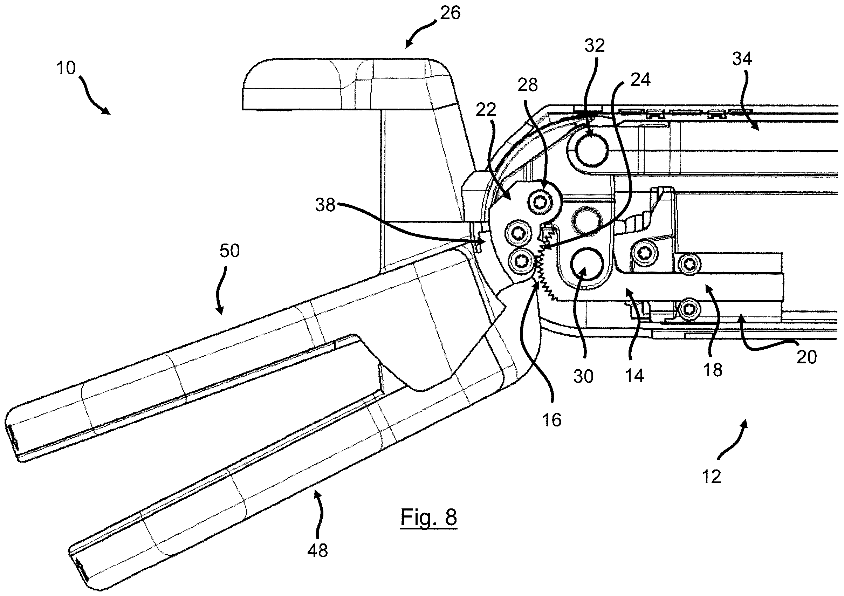

Wie in der Figur 8 gezeigt ist, kann die Feststellbremse 10 weiterhin Verkleidungen aufweisen, um sowohl die Griffelemente 36, 42 als auch das Vorspannelement 40 vor Verunreinigungen zu schützen. Gleichermaßen können solche Verkleidungen, welche bevorzugt aus einem Kunststoff gebildet sind, auch verhindern, dass bei Betätigung der Griffelemente 36, 42 versehentlich das Vorspannelement 40 berührt wird. Verkleidungen können entsprechend die Reinigung und Sterilität der zu betätigenden Komponenten der Feststellbremse 10 erleichtern oder verbessern und gleichzeitig einen Benutzer oder auch Komponenten eines am Gelenk 26 befestigten Geräts vor eventueller Klemmgefahr schützen.

Die Verkleidungen können eine erste Verkleidung 48 für das erste Griffelement 36 sowie eine zweite Verkleidung 50 für das zweite Griffelement 42 aufweisen, wobei die Verkleidungen 48, 50 jeweils als Halbschalen ausgeführt sein können, welche ineinander einsteckbar sind. Auf diese Weise kann die Montage erheblich vereinfacht werden. Zur festen Verbindung der Halbschalen können Rasthaken und entsprechende Taschen an den Halbschalen vorgesehen sein, welche im zusammengesteckten Zustand ineinander eingreifen und einrasten. Alternativ oder zusätzlich können eine oder mehrere Schraubverbindungen für jede Verkleidung 48, 50 vorgesehen sein. Im vorliegenden Beispiel weist die zweite Verkleidung 50 einen Abschnitt auf, welcher sich von einem längsseitigen Endbereich der zweiten Verkleidung 50 in Richtung der ersten Verkleidung 48 erstreckt und auf diese Weise eine laterale oder seitliche Abdeckung für das Vorspannelement 40 definiert. Die seitliche Abdeckung ist dabei derart angeordnet, dass sie sich außerhalb der ersten Verkleidung 48 erstreckt und die Bewegung des ersten Griffelements 36 zum zweiten Griffelement 42 dadurch nicht beeinträchtigt wird.

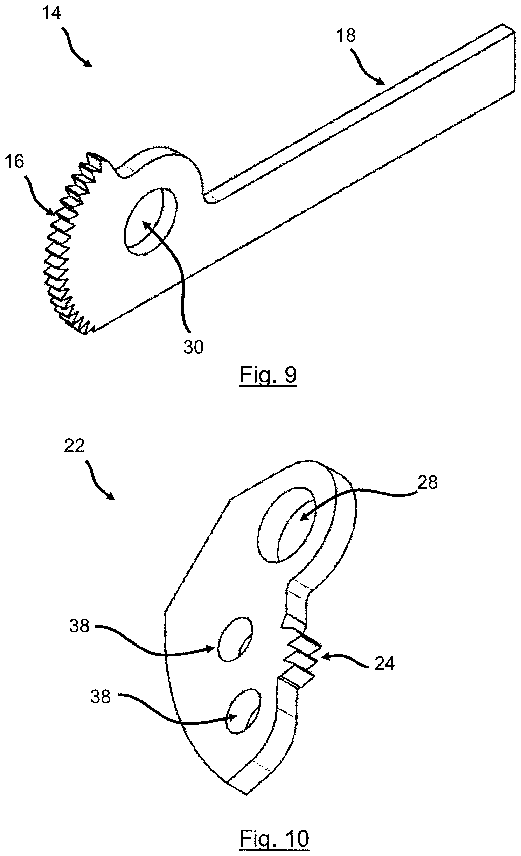

In den Figuren 9 und 10 sind der erste Körper 14 und der zweite Körper 22 in einer perspektivischen Detailansicht dargestellt. Die Verzahnungsabschnitte 16, 24 sind dabei geometrisch identisch zueinander ausgebildet, wobei der zweite Verzahnungsabschnitt 24 lediglich eine geringere Erstreckung aufweist. Grund dafür ist, dass die Arretierpositionen vom ersten Verzahnungsabschnitt 16 definiert sind und der Verzahnungsabschnitt 24 am gerundeten ersten Verzahnungsabschnitt 16 einrastet, um die relative Bewegung zueinander zu verhindern. Mit anderen Worten kann der zweite Verzahnungsabschnitt 24 eine geringere Anzahl von Zähnen aufweisen, zumal die möglichen Kontaktflächen im eingerasteten Zustand beschränkt sind.

Der erste Körper 14 und der zweite Körper 22 weisen dabei jeweils eine Aufnahme 30 beziehungsweise eine Aufnahme 28 auf, welche eine Verbindung mit dem zweiten Bauteil, bevorzugt dem Gelenk 26, ermöglichen. Darüber hinaus sind in Figur 10 auch die Aufnahmen 38 gezeigt, welche ebenfalls als jeweilige Bohrung für eine Schraubverbindung zwischen dem zweiten Körper 22 und dem ersten Griffelement 36 konfiguriert sind.

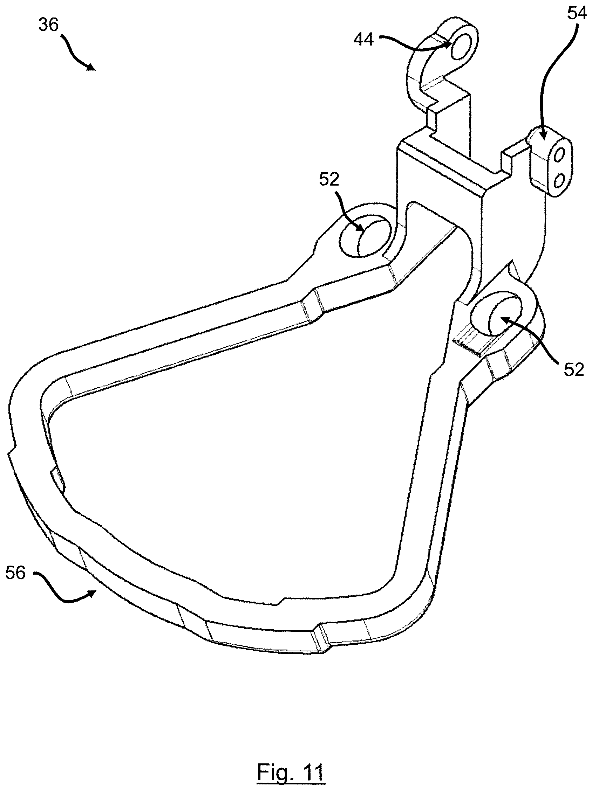

In Figur 11 ist das erste Griffelement 36 in einer perspektivischen Detailansicht gezeigt. In dieser Figur ist die Haltevorrichtung 52 in Form von zwei Taschen ausgebildet, welche zur jeweiligen Aufnahme des Vorspannelements 40 beziehungsweise einer Feder konfiguriert sind. Die Federn, welche sich am zweiten Griffelement 42 abstützen, greifen entsprechend in die Taschen ein und spannen das erste Griffelement 36 vor in eine eingerastete Position der Verzahnungsabschnitte 16, 24. Die Betätigung des ersten Griffelements 36 kann dabei insbesondere an einem freien Endbereich 56 erfolgen.

Weiterhin sind in der Figur 11 bevorzugte Ausgestaltungen der Aufnahme 44 zum beidseitigen, drehbaren Lagern des ersten Griffelements 36 am zweiten Bauteil sowie der Aufnahme 54 zur Befestigung des ersten Griffelements 36 am zweiten Körper 22 gezeigt. Die Aufnahmen 44, 54 können dabei ebenfalls als Bohrungen oder Durchgangslöcher ausgebildet sein, um eine entsprechende Schraubverbindung, bevorzugt mit einem Spiel, zu ermöglichen.

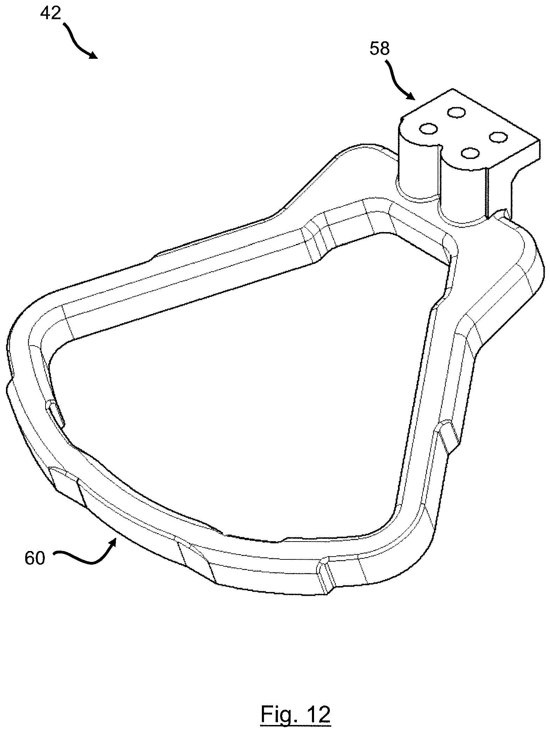

Das entsprechende zweite Griffelement 42 ist in einer perspektivischen Detailansicht in der Figur 12 gezeigt. Das zweite Griffelement 42 ist im montierten Zustand der Feststellbremse 10 bevorzugt parallel zum ersten Griffelement 36 geführt. Zur vereinfachten Betätigung weist das zweite Griffelement 42 vorliegend ebenfalls einen freien Endbereich 60 auf, welcher im montierten Zustand der Feststellbremse 10 benachbart zum freien Endbereich 56 des ersten Griffelements 36 angeordnet ist. Auf der gegenüberliegenden Seite des zweiten Griffelements 42 befindet sich eine Aufnahme 58, welche eine plattenförmige Oberfläche mit bevorzugt vier Bohrungen aufweist. Auf diese Weise kann das zweite Griffelement 42 einfach am zweiten Bauteil beziehungsweise am vorderen Gelenk 26 mittels einer Schraubverbindung befestigt werden.

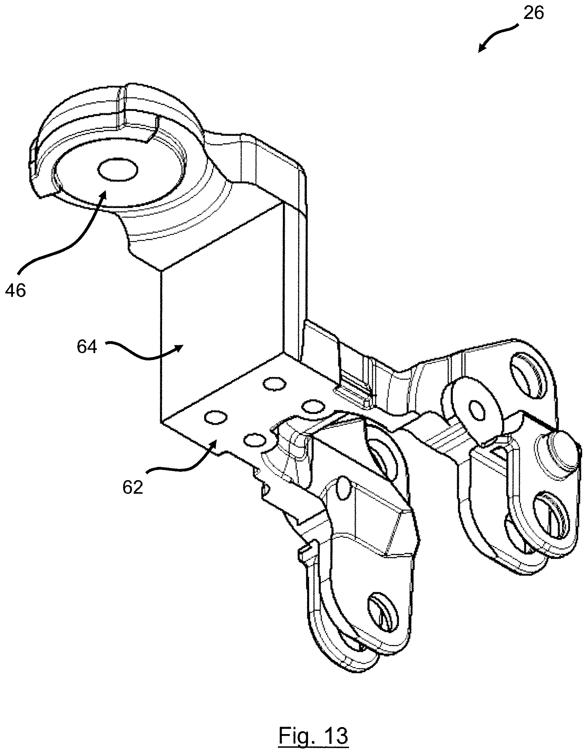

Eine entsprechende Ausgestaltung eines Gelenks 26 ist in der Figur 13 gezeigt. So weist das Gelenk 26 an seiner Unterseite eine entsprechende Aufnahme 62 auf, in die die Schrauben von der Unterseite der Aufnahme 58 des zweiten Griffteils 42 eingeschraubt werden können. Um die Befestigung und die Anordnung der Griffelemente 36, 42 zu erleichtern, weist das Gelenk 26 entsprechend eine ausreichende Längserstreckung auf, um die Aufnahme 62 bereitzustellen. Darüber hinaus wurde eine Stufe 64 vorgesehen, um die Befestigung eines Geräts oder einer Schnittstelle an der Haltevorrichtung 46 zu erleichtern und den Bauraum zu vergrößern. Somit kann verhindert werden, dass deren Montage und/oder deren Größe durch die Griffelemente 36, 42 beschränkt wird.

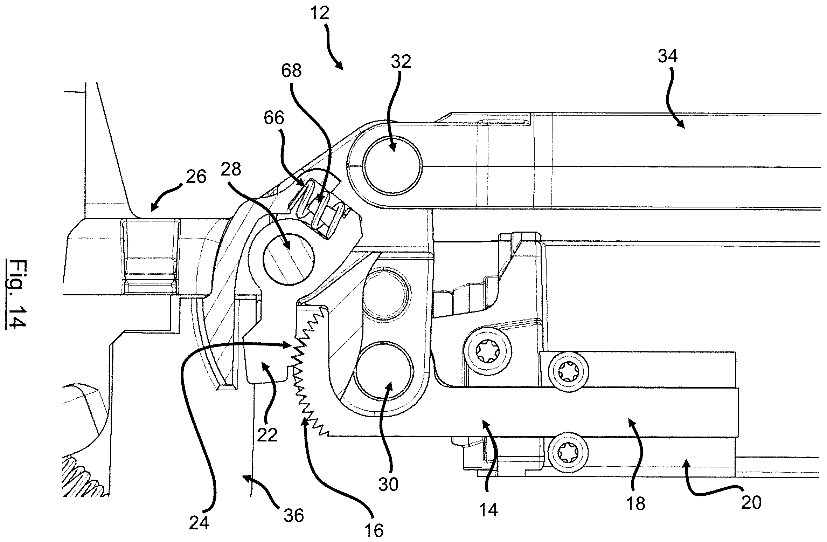

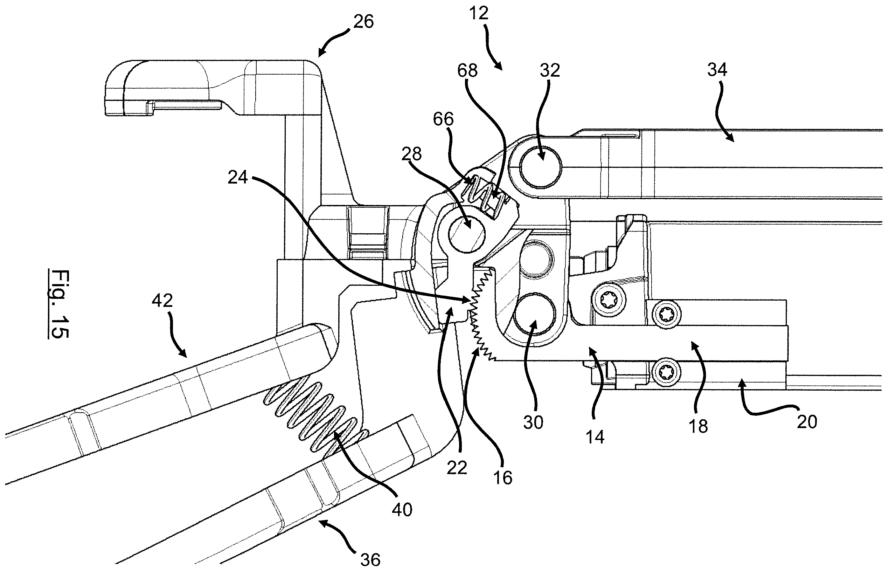

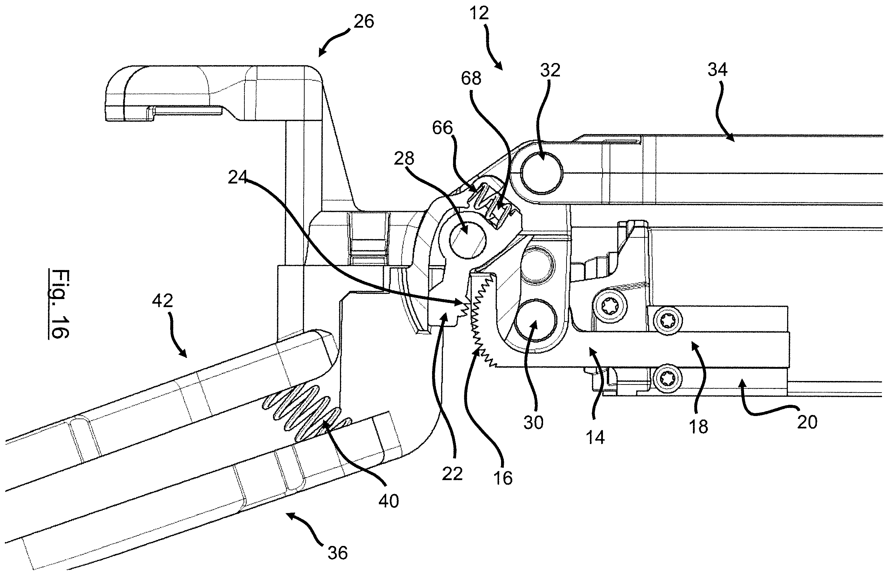

In den Figuren 14 bis 17 ist eine alternative Ausgestaltung des ersten Griffelements 36 und des zweiten Körpers 22 dargestellt. Gemäß dieser Ausführungsform sind das erste Griffelement 36 und der zweite Körper 22 nicht unmittelbar, sondern mittelbar über ein Vorspannelement miteinander verbunden, vorliegend mittels einer Feder 66. Die Feder 66 wird dabei bevorzugt von einem Haltedorn 68 gehalten und bildet damit einen Federmechanismus. Entsprechend ist die Feder 66 am zweiten Körper 22 gelagert und ist gleichermaßen mit dem parallelgeführten Abschnitt des ersten Griffelements 36 verbunden. Im Falle einer Betätigung des ersten Griffelements 36, wie dies in Figur 16 gezeigt ist, wird der zweite Körper 22 aufgrund der entsprechenden Bewegung der Feder 66 mitgedreht, sodass der zweite Verzahnungsabschnitt 24 radial vom ersten Verzahnungsabschnitt 16 wegbewegt wird.

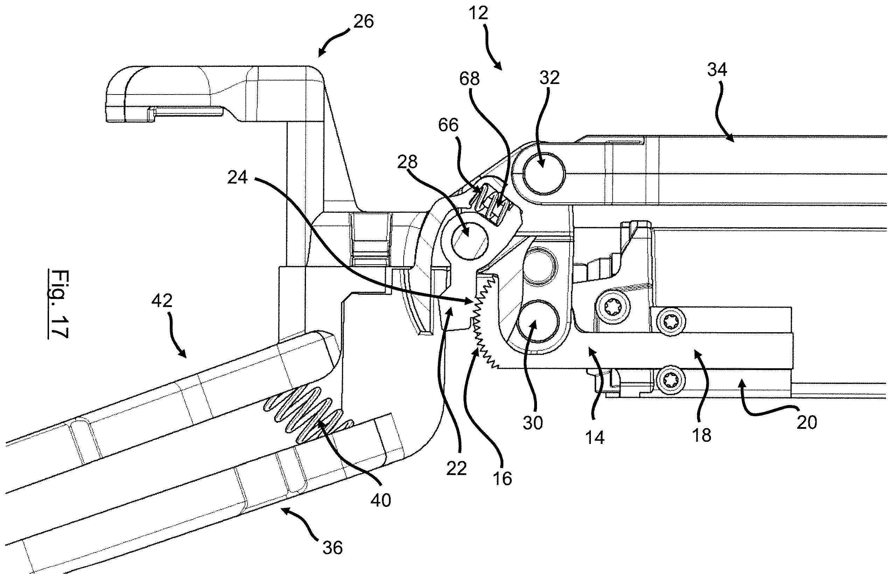

Die mittelbare Verbindung hat jedoch den Vorteil, dass eine versehentliche Betätigung des ersten Griffelements 36 bei einem nicht ausbalancierten Federarm 12 nicht zu einer ruckartigen Bewegung des Federarms 12 führt. Denn die Feder 66 kann für eine vorgegebene Traglast am Federarm 12 vorgesehen sein. Liegt diese Traglast nicht länger vor, beispielsweise wenn ein Monitor vom Federarm 12 abgenommen wurde, so kann die Feder 66 die Reibungskräfte, welche zwischen den Verzahnungsabschnitten 16, 24 entstehen, nicht überbrücken. Folglich kann, wie dies in Figur 17 gezeigt ist, zwar das erste Griffelement 36 betätigt und die Feder 66 zusammengedrückt werden, eine Bewegung des zweiten Körpers 22 bleibt in einem solchen Fall jedoch aus. Auf diese Weise kann die Bedienung erheblich sicherer gestaltet werden.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 10: Feststellbremse
- 12: Federarm
- 14: erster Körper
- 16: erster Verzahnungsabschnitt
- 18: länglicher Abschnitt
- 20: Federkasten
- 22: zweiter Körper
- 24: zweiter Verzahnungsabschnitt
- 26: Gelenk oder Gelenkanordnung
- 27: hinteres Gelenk
- 28: Aufnahme
- 30: Aufnahme
- 32: Aufnahme
- 34: Parallelführung
- 36: erstes Griffelement
- 38: Aufnahme
- 40: Vorspannelement
- 42: zweites Griffelement
- 44: Aufnahme
- 46: Haltevorrichtung
- 48: erste Verkleidung
- 50: zweite Verkleidung
- 52: Haltevorrichtung
- 54: Aufnahme
- 56: freier Endbereich
- 58: Aufnahme
- 60: freier Endbereich
- 62: Aufnahme
- 64: Stufe
- 66: Feder
- 68: Haltedorn

## Patentansprüche

1. Feststellbremse (10) für einen Federarm (12), umfassend
- einen ersten Körper (14) mit einem ersten Verzahnungsabschnitt (16), wobei der erste Körper (14) dazu eingerichtet ist, im montierten Zustand der Feststellbremse (10) mit einem ersten Bauteil des Federarms (12), das seine Neigung bei einer Höhenverstellung des Federarms (12) ändert, verbunden zu sein,
- einen zweiten Körper (22) mit einem zweiten Verzahnungsabschnitt (24), wobei der zweite Verzahnungsabschnitt (24) mit dem ersten Verzahnungsabschnitt (16) in Eingriff bringbar ist, wobei der zweite Körper (22) dazu eingerichtet ist, im montierten Zustand der Feststellbremse (10) an einem zweiten Bauteil des Federarms (12), das seine Neigung bei einer Höhenverstellung des Federarms (12) beibehält, drehbar gelagert zu sein, und
- ein erstes Griffelement (36), wobei ein Endbereich des Griffelements dazu eingerichtet ist, im montierten Zustand der Feststellbremse (10) am zweiten Bauteil drehbar gelagert zu sein,
wobei das erste Griffelement (36) mechanisch derart mit dem zweiten Körper (22) verbunden ist, dass der erste Verzahnungsabschnitt (16) im nicht betätigten Zustand des ersten Griffelements (36) drehfest mit dem zweiten Verzahnungsabschnitt (24) im Eingriff steht und im betätigten Zustand des ersten Griffelements (36) radial vom zweiten Verzahnungsabschnitt (24) beabstandet ist.

2. Feststellbremse (10) gemäß Anspruch 1, wobei das erste Griffelement (36) mindestens ein Vorspannelement (40) aufweist, welches dazu eingerichtet ist, das erste Griffelement (36) derart relativ zum zweiten Bauteil vorzuspannen, dass der mit dem ersten Griffelement (36) mechanisch verbundene zweite Verzahnungsabschnitt (24) des zweiten Körpers (22) in Richtung des ersten Verzahnungsabschnitts (16) vorgespannt ist.

3. Feststellbremse (10) gemäß Anspruch 2, wobei die Feststellbremse (10) ein zweites Griffelement (42) aufweist, welches im montierten Zustand der Feststellbremse (10) fest mit dem zweiten Bauteil verbunden und vom ersten Griffelement (36) beabstandet ist, wobei das zweite Griffelement (42) eine oder mehrere mit dem Vorspannelement (40) verbundene Haltevorrichtungen (52) aufweist, wobei das zweite Griffelement (42) bevorzugt eine oder mehrere Aufnahmen (58) für das zweite Bauteil, bevorzugt für ein an der Vorderseite des Federarms angebundenes Gelenk (26), aufweist, wobei die eine oder mehrere Aufnahmen (58) bevorzugt derart ausgebildet und angeordnet sind, dass das zweite Griffelement (42) sich im Wesentlichen in einer Haupterstreckungsebene des ersten und des zweiten Bauteils erstreckt.

4. Feststellbremse (10) gemäß Anspruch 2 oder 3, wobei das erste Griffelement (36) und/oder das zweite Griffelement (42) jeweils als Druckgussteil ausgebildet sind.

5. Feststellbremse (10) gemäß einem der vorstehenden Ansprüche, wobei die Kontaktflächen zwischen den Verzahnungsabschnitten (16, 24) im nicht betätigten Zustand des ersten Griffelements (36) im Wesentlichen senkrecht zu einer Höhenverstellrichtung des Federarms (12) ausgerichtet sind.

6. Feststellbremse (10) gemäß einem der vorstehenden Ansprüche, wobei die Rastpositionen der Verzahnungsabschnitte (16, 24) gleichmäßig voneinander beabstandet sind und ein Abstand zwischen benachbarten Rastpositionen zwischen 2 Grad und 10 Grad liegt, bevorzugt zwischen 4 Grad und 8 Grad.

7. Feststellbremse (10) gemäß einem der vorstehenden Ansprüche, wobei der erste Körper (14) und der zweite Körper (22) plattenförmig ausgebildet sind und/oder wobei der erste Körper (14) einen länglichen und/oder stabförmigen Abschnitt (18) aufweist, welcher an einem dem ersten Verzahnungsabschnitt (16) gegenüberliegenden Endbereich einen Befestigungsmechanismus für das erste Bauteil aufweist.

8. Feststellbremse (10) gemäß Anspruch 7, wobei der erste Körper (14) dazu ausgebildet ist, im montierten Zustand der Feststellbremse (10), schraubschlüssig, formschlüssig oder stoffschlüssig mit dem ersten Bauteil verbunden zu sein oder wobei der erste Körper (14) das erste Bauteil umfasst und einstückig mit dem ersten Bauteil ausgebildet ist.

9. Feststellbremse (10) gemäß einem der vorstehenden Ansprüche, wobei der erste Körper (14) zur Befestigung an einem vertikal schwenkbaren Teil des Federarms (12), bevorzugt einem Federkasten (20) oder einer Parallelführung (34) des Federarms (12), ausgelegt ist.

10. Feststellbremse (10) gemäß einem der vorstehenden Ansprüche, umfassend einen dritten Körper und einen vierten Körper,
wobei der dritte Körper einen dritten Verzahnungsabschnitt aufweist und dazu eingerichtet ist, im montierten Zustand der Feststellbremse (10) mit dem ersten Bauteil des Federarms (12) verbunden zu sein,
wobei der vierte Körper einen vierten Verzahnungsabschnitt aufweist, welcher mit dem dritten Verzahnungsabschnitt in Eingriff bringbar ist, wobei der vierte Körper dazu eingerichtet ist, im montierten Zustand der Feststellbremse (10) an dem zweiten Bauteil drehbar gelagert zu sein, und
wobei das erste Griffelement (36) mechanisch derart mit dem vierten Körper verbunden ist, dass der dritte Verzahnungsabschnitt im nicht betätigten Zustand des ersten Griffelements (36) drehfest mit dem vierten Verzahnungsabschnitt im Eingriff steht und im betätigten Zustand des ersten Griffelements (36) radial vom vierten Verzahnungsabschnitt beabstandet ist.

11. Feststellbremse (10) gemäß Anspruch 10, wobei der dritte Körper parallel zum ersten Körper ausgerichtet und der vierte Körper parallel zum zweiten Körper ausgerichtet sind und wobei die Körper dazu eingerichtet sind, im montierten Zustand der Feststellbremse an sich gegenüberliegenden Seiten des jeweiligen Bauteils befestigt zu sein.

12. Feststellbremse (10) gemäß einem der vorstehenden Ansprüche, wobei das erste Griffelement (36) zur drehbaren Lagerung am zweiten Bauteil zumindest an einer dem zweiten Körper (22) gegenüberliegenden Seite eine oder mehrere Aufnahmen (44) oder Aussparungen aufweist und/oder wobei der zweite Körper (22) eine Aussparung oder eine Aufnahme (28) zur drehbaren Lagerung des zweiten Körpers (22) am zweiten Bauteil aufweist.

13. Feststellbremse (10) gemäß einem der vorstehenden Ansprüche, wobei das erste Griffelement (36) mittels eines Federmechanismus (66, 68) mit dem zweiten Körper (22) verbunden ist, wobei der Federmechanismus (66, 68) dazu eingerichtet ist, eine Vorspannkraft bereitzustellen, welche einer am Federarm (12) vorgegebenen Traglast entspricht.

14. Feststellbremse (10) gemäß Anspruch 13, wobei der Federmechanismus (66, 68) eine Feder (66) und einen die Feder (66) aufnehmenden Haltedorn (68) umfasst, wobei der Haltedorn (66) am zweiten Körper (22) derart angeordnet ist, dass die Feder (66) mit einem parallelgeführten Abschnitt des ersten Griffelements (36) verbunden ist.

15. Feststellbremse (10) gemäß einem der Ansprüche 1 bis 12, wobei das erste Griffelement (36) mit dem zweiten Körper (22) fest verbunden ist oder wobei das erste Griffelement (36) mittels eines Zugmechanismus, bevorzugt mittels eines Seilzugs oder eines Bowdenzugs, mit dem zweiten Körper (22) verbunden ist.

16. Federarm (12), umfassend ein vertikal schwenkbares, eine Federmechanik aufnehmendes Federarmteil (20), eine mit dem Federarmteil (20) gekoppelten Parallelführung (34) zum Ausrichten einer mit dem Federarm (12) koppelbaren Gelenkanordnung (26) und eine Feststellbremse (10) gemäß einem der vorstehenden Ansprüche, wobei der erste Körper (14) mit dem Federarmteil (20) oder mit der Parallelführung (34) verbunden ist.
